# DEMANDE DE BREVET EUROPEEN

(11) **EP 4 753 310 A1**
(43) Date de publication de la demande: **03.06.2026**
(21) Numéro de dépôt: 25213424.2
(22) Date de dépôt: 04.11.2025
(51) Int. Cl.: H04W 12/30

(54) **PROCÉDÉ ET DISPOSITIF DE TRANSFERT DE PROFIL ENTRE DEUX ÉLÉMENTS SÉCURISÉS**

(30) Priorité: 29.11.2024 FR 2413257
(71) Demandeur: IDEMIA France, 92400 Courbevoie (FR)
(72) Inventeur: DOS SANTOS, Elder, 92400 Courbevoie (FR); DUMOULIN, Jérôme, 92400 Courbevoie (FR)
(74) Mandataire: Idemia

(57) **Abrégé**

L'invention concerne un procédé de transfert d'un profil courant depuis un élément sécurisé source au sein d'un dispositif source vers un élément sécurisé cible au sein d'un dispositif cible, le procédé comprenant comme étapes :
- surveillance et enregistrement par l'élément sécurisé source des modifications apportées à un profil initial installé dans l'élément sécurisé source pour obtenir le profil courant ;
- génération d'un fichier de différences entre profil initial et profil courant par l'élément sécurisé source sur la base des modifications enregistrées ;
- obtention du profil initial et génération d'un profil à installer sur l'élément sécurisé cible par un SM-DP+ ;
- chargement et installation du profil généré dans l'élément sécurisé cible, le profil installé correspondant au profil initial auquel a été appliqué le fichier de différences généré.

## Description

### Domaine technique

L'invention se rapporte à la gestion des profils de connexion dans un élément sécurisé d'un dispositif connectable à un réseau cellulaire.

### Technique antérieure

Un dispositif connectable à un réseau de communication cellulaire, tel un téléphone portable, comporte traditionnellement un élément sécurisé utilisé pour s'authentifier sur le ou les réseaux de communication, typiquement de téléphonie mobile. De tels éléments sécurisés incluent les cartes de circuit intégré universelles UICC (pour « Universal Integrated Circuit Card »), notamment les cartes SIM (pour « Subscriber Identity Module » - ou module d'identité d'abonné), et leur version intégrée connue sous l'appellation eUICC (pour embedded UICC - ou UICC intégrée) aussi appelée eSIM. Un module eUICC est un élément matériel sécurisé, généralement de petite taille, pouvant être intégré dans un terminal mobile hôte afin de mettre en œuvre les fonctions d'une carte SIM traditionnelle.

Les eUICCs peuvent comprendre plusieurs abonnements ou profils correspondant chacun à un opérateur. Chaque profil comprend des données de souscription, par exemple un identifiant IMSI (pour « International Mobile Subscriber Identity »), des clés cryptographiques et des algorithmes, spécifiques à un abonnement fourni par un opérateur de téléphonie mobile.

Les cartes eUICC offrent une plus grande flexibilité dans la gestion des abonnements, et notamment dans la fourniture et la gestion à distance des profils. Les cartes eUICC sont en effet reprogrammables et permettent donc, dans le temps, de charger, supprimer et mettre à jour plusieurs profils d'abonné (ou profils de communication) au sein de la même carte eUICC. Chaque profil d'abonné est contenu dans un conteneur sécurisé (noté ISD-P pour « *Issuer Security Domain Profile* » qui ne peut contenir qu'un seul profil) qui contient, comme une carte SIM classique, les données permettant, lorsque le profil est actif, de s'authentifier auprès d'un réseau correspondant de téléphonie mobile pour accéder à un service (par exemple de voix ou de données).

En changeant le profil d'abonné actif dans la carte eUICC, il est possible de changer d'opérateur ou de modifier l'accès à des services associés.

La spécification « SGP.22 - RSP Technical Specification - Version 2.3 - 30 June 2021 », ci-dessous « SGP.22 », décrit notamment une solution technique de fourniture et gestion à distance des eUICCs dans des terminaux grand public (« Consumer Devices »). Les procédures décrites sont typiquement à l'initiative du terminal (incluant l'eUICC) pour la gestion des eUICCs (au sens d'une administration des états des profils, par exemple activé, désactivé, supprimé, ...) et l'initiation d'une fourniture de profil (par exemple requête de chargement ou (fourniture) d'un profil sur une eUICC) et à l'initiative d'un serveur, dénommé SM-DP+ (pour « Subscription Manager Data Preparation enhanced»), dans le cadre d'une solution technique de fourniture (ou provision, ou bien encore distribution) de profils dans les eUICCs.

La spécification « SGP.02 - Remote Provisioning Architecture for Embedded UICC Technical Specification - Version 4.2 - 07 July 2022 », ci-dessous « SGP.02 », décrit une solution technique de fourniture et gestion à distance des eUICCs intégrées aux terminaux M2M (« machine to machine »). Les procédures décrites sont typiquement à l'initiative d'un couple de serveurs, dénommés SM-DP (pour « Subscription Manager Data Preparation ») et SM-SR (pour « Subscription Manager Data Secure Routing »).

Des procédures typiques de gestion des eUICC comme décrites dans ces spécifications incluent, entre autres, le chargement et l'installation de profil, l'activation de profil, la désactivation de profil, la suppression de profil.

Lorsqu'un usager de dispositif connectable à un réseau de communication cellulaire s'abonne auprès d'un opérateur, un profil de connexion est généré, transféré et installé au sein de l'élément sécurisé du dispositif. Ce profil contient typiquement un système de fichiers et des applications liées à l'abonnement de l'usager.

Toutefois, un tel profil n'est pas immuable. Certaines opérations entraînent des modifications du profil. Ces opérations peuvent être à l'initiative de l'usager, comme par exemple, le changement de son code personnel d'identification (*Personnal Identification Number, PIN, code* en anglais), ou la souscription à un service annexe à son abonnement. D'autres opérations peuvent être à l'initiative de l'opérateur, comme par exemple la mise à jour de certains composants du profil. Toutes ces opérations entraînent des modifications du profil au fil du temps.

Dans certaines circonstances, l'usager peut souhaiter transférer son abonnement, et donc son profil, d'un appareil à un autre. Le cas d'usage typique est une personne acquérant un nouveau téléphone mobile et souhaitant transférer son abonnement de son ancien téléphone au nouveau.

Lorsque les dispositifs utilisent des cartes SIM physiques, cette opération est simple. L'usager retire sa carte SIM de son ancien téléphone, l'insère dans le nouveau qui peut dès lors utiliser l'abonnement de l'usager pour se connecter au réseau de communication cellulaire. Le profil de l'usager étant stocké dans la carte SIM, ce profil est transféré avec cette carte dans son état courant. L'usager retrouve donc toutes les personnalisations et les mises à jour ayant été apportées à son profil initial au cours du temps.

Dans le cas des éléments sécurisés embarqués, tel que les eUICCs par exemple, le transfert est nettement plus complexe. Il n'est plus possible de transférer l'élément sécurisé dans son ensemble incluant le profil courant d'un appareil à un autre. Seul le profil doit être transféré d'un élément sécurisé à un autre. Ce transfert se heurte aux mécanismes de sécurisation mis en place dans le standard. En particulier, un profil est lié à un élément sécurisé et il n'est normalement pas possible de l'utiliser sur un autre élément sécurisé. D'autre part, le chargement et l'installation d'un profil nécessite de respecter des contraintes sur le format, la compression et autres pour respecter les mécanismes d'installation mis en place par les standards précités.

L'invention présentée vise à résoudre ces problèmes.

### Exposé de l'invention

A cet effet, l'invention propose un procédé permettant le transfert d'un profil depuis une eUICC source vers une eUICC destination. Selon ce procédé, l'eUICC source ayant chargé et installé un profil initial maintient un fichier, appelé delta, qui recense toutes les modifications apportées au cours du temps au profil initial. Par fichier, il faut comprendre tout type de format de données permettant d'assurer une traçabilité et un enregistrement d'informations relatives à une donnée, par exemple et de façon non limitative, un élément de profil, une valeur spécifique, une variable stockée ou un objet d'un langage informatique mémorisé dans une mémoire électronique, un registre de mémoire, une base de données ... Lorsque le transfert de profil est initié par l'eUICC source, cette eUICC source obtient l'identifiant de l'eUICC destination et notifie le SM-DP+ du transfert à venir. Le SM-DP+ retrouve le profil initial qui avait été chargé sur l'eUICC source. Dans un premier mode de réalisation, l'eUICC source transmet un delta au SM-DP+, qui l'applique au profil initial pour préparer un profil correspondant au profil courant de l'eUICC source, et qui peut alors être chargé et installé sur l'eUICC destination. Par delta, il faut comprendre toutes différences qui, à partir du profil initial, permettent d'aboutir au profil courant ou bien engendrant, par exemple, une différence de contenu, de taille d'occupation mémoire. Ces différences peuvent être, par exemple et de façon non limitative et potentiellement cumulative, une installation d'application, la modification d'une valeur quelconque, la suppression d'un fichier, l'identification, le référencement ou bien encore le recensement ou localisation d'une modification, ... Dans un second mode de réalisation, l'eUICC source transmet également le delta au SM-DP+, mais celui-ci ne l'applique pas au profil initial. C'est ce profil initial qui est chargé et installé dans l'eUICC destination. Le SM-DP+ transmet le delta à l'eUICC destination qui l'applique au profil initial installé. Dans un troisième mode de réalisation, l'eUICC source ne transmet pas le delta au SM-DP+ mais directement à l'eUICC de destination qui peut, alors, l'appliquer, après avoir chargé et installé le profil initial obtenu auprès de SM-DP+. Appliquer un delta sur un profil initial permet, par exemple, d'intégrer, d'installer, de prendre en compte toutes différences intervenues sur le profil initial pour aboutir à un profil dont les caractéristiques techniques sont identiques à celles d'un profil courant de référence et vers lequel il est souhaité de converger.

Dans tous les modes de réalisation, le SM-DP+ contrôle le transfert. Il met à jour les informations de lien entre le profil et l'eUICC sur laquelle le profil est installé. Il s'assure aussi que le profil est désactivé dans l'eUICC source avant toute activation du profil dans l'eUICC destination, ceci afin d'assurer qu'un même profil ne puisse être actif dans deux eUICC différentes.

Il est ainsi proposé un procédé de transfert d'un profil courant depuis un élément sécurisé source au sein d'un dispositif source vers un élément sécurisé cible au sein d'un dispositif cible, le procédé comprenant les étapes suivantes :
- surveillance et enregistrement par l'élément sécurisé source des modifications apportées à un profil initial installé dans l'élément sécurisé source pour obtenir le profil courant ;
- génération d'un fichier de différences entre le profil initial et le profil courant par l'élément sécurisé source sur la base des modifications enregistrées ;
- obtention du profil initial et génération d'un profil à installer sur l'élément sécurisé cible par un SM-DP+ ; et
- chargement et installation du profil généré dans l'élément sécurisé cible, le profil installé correspondant au profil initial auquel a été appliqué le fichier de différences généré.

Dans un mode de réalisation, le procédé comporte en outre les étapes suivantes :
- transmission du fichier de différences par l'élément sécurisé source au SM-DP+ ; et
- application du fichier de différence au profil initial par le SM-DP+ pour générer le profil à installer.

Dans un mode de réalisation, le procédé comporte en outre les étapes suivantes :
- transmission du fichier de différences par l'élément sécurisé source à l'élément sécurisé cible ; et
- le profil généré correspondant au profil initial, application du fichier de différence au profil initial après son installation par l'élément sécurisé cible.

Dans un mode de réalisation, la transmission du fichier de différences par l'élément sécurisé source à l'élément sécurisé cible est faite via le SM-DP+.

Dans un mode de réalisation, la transmission du fichier de différences par l'élément sécurisé source à l'élément sécurisé cible est faite par une connexion directe entre le dispositif source et le dispositif cible.

Dans un mode de réalisation, le profil courant comprenant des applications « Javacard », le fichier de différence intègre pour chaque application « Javacard » un paquet de données représentant l'état de l'application « Javacard ».

Il est également proposé un procédé de transfert d'un profil courant depuis un élément sécurisé source au sein d'un dispositif source vers un élément sécurisé cible au sein d'un dispositif cible, le procédé comprenant les étapes suivantes par l'élément sécurisé source:
- surveillance et enregistrement par l'élément sécurisé source des modifications apportées à un profil initial installé dans l'élément sécurisé source pour obtenir le profil courant ;
- génération d'un fichier de différences entre le profil initial et le profil courant par l'élément sécurisé source sur la base des modifications enregistrées ; et
- transmission du fichier de différences au dispositif cible ou à un serveur SM-DP+.

Il est également proposé un procédé de transfert d'un profil courant depuis un élément sécurisé source au sein d'un dispositif source vers un élément sécurisé cible au sein d'un dispositif cible, le procédé comprenant les étapes suivantes par l'élément sécurisé cible:
- chargement et installation d'un profil initial ;
- réception d'un fichier de différences entre le profil initial et le profil courant ; et
- application du fichier de différences au profil initial installé pour obtenir le profil courant.

Il est également proposé un élément sécurisé source comprenant un processeur, le processeur étant configuré pour effectuer les étapes suivantes pour un transfert d'un profil courant depuis l'élément sécurisé source au sein d'un dispositif source vers un élément sécurisé cible au sein d'un dispositif cible :
- surveillance et enregistrement des modifications apportées à un profil initial installé dans l'élément sécurisé source pour obtenir le profil courant ;
- génération d'un fichier de différences entre le profil initial et le profil courant par l'élément sécurisé source sur la base des modifications enregistrées ; et
- transmission du fichier de différences au dispositif cible ou à un serveur SM-DP+.

Il est également proposé un élément sécurisé cible comprenant un processeur, le processeur étant configuré pour effectuer les étapes suivantes pour un transfert d'un profil courant depuis un élément sécurisé source au sein d'un dispositif source vers l'élément sécurisé cible au sein d'un dispositif cible :
- chargement et installation d'un profil initial ;
- réception d'un fichier de différences entre le profil initial et le profil courant ; et
- application du fichier de différences au profil initial installé pour obtenir le profil courant.

La présente invention vise également un programme informatique comportant des instructions pour la mise en œuvre du procédé précédemment décrit, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, pour exécuter tout ou partie du procédé décrit ci-avant.

### Brève description des dessins

D'autres caractéristiques, détails et avantages de l'invention apparaîtront à la lecture de la description détaillée ci-après. Celle-ci est purement illustrative et doit être lue en regard des dessins annexés, sur lesquels :
La figure 1 illustre l'architecture générale d'un système pour la mise en œuvre de l'invention ;
La figure 2 illustre les principales étapes d'un procédé de transfert de profil entre une eUICC source et une eUICC cible selon deux premiers modes de réalisation de l'invention ;
La figure 3 illustre les principales étapes d'un procédé de transfert de profil entre une eUICC source et une eUICC cible selon un troisième mode de réalisation de l'invention ;
La figure 4 est un bloc-diagramme schématique d'un dispositif de traitement de l'information pour la mise en œuvre d'un ou plusieurs modes de réalisation de l'invention ;

### Description détaillée

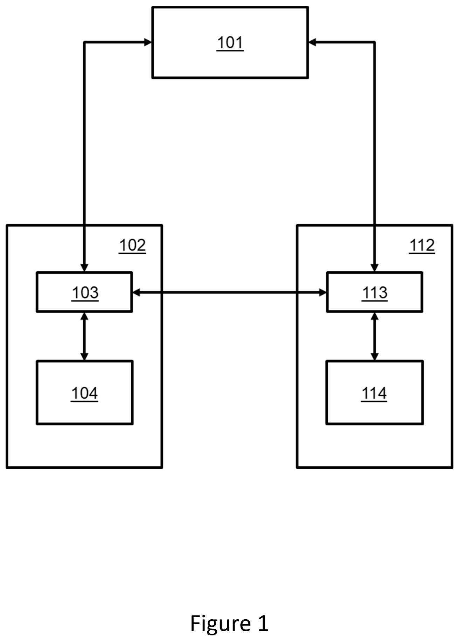

La figure 1 illustre l'architecture générale d'un système pour la mise en œuvre de l'invention.

Un premier dispositif 102 connectable à un réseau de communication cellulaire, appelé dispositif source, comprend un élément sécurisé 104, par exemple une eUICC. L'eUICC 104, aussi appelé élément sécurisé 104 source ou bien encore eUICC source 104, comprend un système d'exploitation et au moins un profil de connexion permettant au dispositif source de se connecter au réseau de communication cellulaire. Le dispositif source 102 comprend également un module 103 de gestion locale des profils (*Local Profile Assistant, LPA,* en anglais). Le LPA 103 gère les profils de l'eUICC 104. Le LPA prend en charge les communications entre un serveur SM-DP+ 101 et l'eUICC 104 pour permettre le chargement de profil et la bascule entre les réseaux. Optionnellement, le LPA 103 peut être localisé dans l'eUICC 104 au lieu de l'être dans le dispositif source 102.

Un second dispositif 112, similaire au premier dispositif 102, comprend son LPA 113 et son élément sécurisé 114, par exemple une eUICC. Le second dispositif 112 est le dispositif cible dans le procédé de transfert de profil décrit dans ce document et l'élément sécurisé 114 est l'élément sécurisé cible, aussi appelé eUICC cible 114. De façon optionnelle, le LPA 113 peut être localisé dans l'élément sécurisé cible 114 au lieu de l'être dans le dispositif cible 112.

Le serveur SM-DP+ est en charge de la préparation (ou génération), de la distribution (ou fourniture, ou bien encore provision) et de la gestion des profils de connexion utilisés par les dispositifs connectables à un réseau de communication cellulaire. Le SM-DP+ reçoit une requête de préparation de profil (ou génération) de la part de l'opérateur du réseau de communication cellulaire et prépare (ou génère) au moins un profil pour une installation au sein d'une eUICC particulière. Les profils sont préparés par le SM-DP+ 101 sur la base de fichiers de données ou de données fournis par l'opérateur du réseau de communication cellulaire, dans le cadre de la requête de préparation envoyée par l'opérateur. Cette préparation consiste essentiellement à, par exemple et de façon non limitative, décrire tous les fichiers et les applications du profile, positionner tous les identifiants uniques du profil (par exemple, l'IMSI (pour « International Mobile Subscriber Identity » en anglais), définir et mettre en place les moyens pour que le profil ne puisse être chargeable que sur une eUICC destinataire, ... Aussi, par exemple, le SM-DP+ prépare les paquets de profils, les sécurise avec une clé de protection de profil, stocke les clés de protection de profil de manière sécurisée et les paquets de profil protégés dans un dépôt référentiel sécurisé. Le SM-DP+ alloue aussi les paquets de profil sécurisés aux identifiants d'eUICCs spécifiés (ou à un identifiant d'eUICC, nommé eID, pour *"eUICC IDentifier"* en anglais). Le SM-DP+ lie aussi les paquets de profils protégés à l'identifiant de l'eUICC correspondant (ou eID) et télécharge de façon sécurisée ces paquets de profils liés vers le LPA de l'eUICC correspondante. Par ailleurs, le SM-DP+ est aussi en charge de la gestion de l'état des profils (par exemple, activé, désactivé, supprimé, ...) sur l'eUICC. Le profil est ensuite chiffré à l'aide de clés négociées avec l'eUICC destinataire du profil. Le profil peut alors être transmis au LPA qui va le charger dans l'eUICC du dispositif pour son installation.

Le SM-DP+ maintient également un registre des profils installés contenant le lien entre le profil et l'eUICC au sein duquel le profil est installé. Le SM-DP+ s'assure également que seules les entités autorisées peuvent y accéder.

Les communications entre un dispositif connectable à un réseau de communication cellulaire et le SM-DP+ peuvent utiliser le réseau de communication cellulaire lorsqu'un profil de connexion actif est présent dans l'élément sécurisé du dispositif. Alternativement, une interface réseau alternative du dispositif peut être utilisée. Par exemple, le dispositif peut comprendre une interface WiFi permettant l'accès à Internet.

La communication directe entre les LPAs des dispositifs source et cible peut également utiliser le réseau de communication cellulaire lorsqu'un profil de connexion actif est présent dans l'élément sécurisé des deux dispositifs.

Alternativement, lorsque les deux dispositifs sont connectés à un même réseau WiFi, ce dernier peut être utiliser pour ces communications. Alternativement, un réseau point à point, typiquement utilisant la technologie Bluetooth, peut être établie entre les deux dispositifs. Enfin, il est également possible d'utiliser les technologies de communication en champ proche (*Near Field Communication, NFC* en anglais) pour échanger des informations entre les deux dispositifs.

L'export de profil depuis une eUICC peut trouver une application dans différents cas d'usage. Un premier cas d'usage est le cas où une opération, par exemple la mise à jour du système d'exploitation de l'eUICC, nécessite beaucoup de mémoire. Dans ce cas, il peut être souhaitable d'exporter un profil, d'exécuter l'opération et de réimporter le profil ensuite. Un second cas d'usage et le cas présenté en introduction de ce document du transfert d'un profil d'un dispositif à un autre, par exemple lorsqu'un usager change son dispositif.

Dans le premier cas d'usage, le profil est réimporté dans la même eUICC. De ce fait, il ne présente pas de contrainte d'interopérabilité. Dans le second cas d'usage, l'eUICC cible peut être produite par un autre fabricant que celui ayant produit l'eUICC source, le profil exporté doit donc être interopérable avec les différentes eUICCs sur le marché.

Un format de profil interopérable standard existe, c'est le format SAIP (pour *SIMAlliance Interoperable Profile* en anglais), notamment définit par le standard Trusted Connectivity Alliance (TCA) et intitulé « eUICC Profile Package: Interoperable Format Test Specification », par exemple dans sa version 3.2.1 publiée en décembre 2022, utilisé par le SM-DP+ lors de la préparation des profils en vue de leur chargement sur une eUICC. Toutefois, l'adoption de ce format pour exporter un profil d'une eUICC nécessite de porter, dans l'eUICC, les fonctionnalités, liées à ce format, utilisées par le SM-DP+. Cette solution se heurte à la difficulté d'implémenter ces fonctionnalités dans l'eUICC du fait des faibles ressources en mémoire et en calcul des eUICCs.

Un profil dit « courant », présent dans l'eUICC source, est le profil devant être exporté. Ce profil courant correspond à un profil initial chargé et installé dans l'eUICC source, lequel a subi des modifications lors de ou au cours de l'usage du dispositif source. Selon un aspect de l'invention, un fichier des différences entre le profil initial et le profil courant est généré par l'eUICC source. Ainsi, il est possible d'utiliser le profil initial et ce fichier de différence pour retrouver le profil courant.

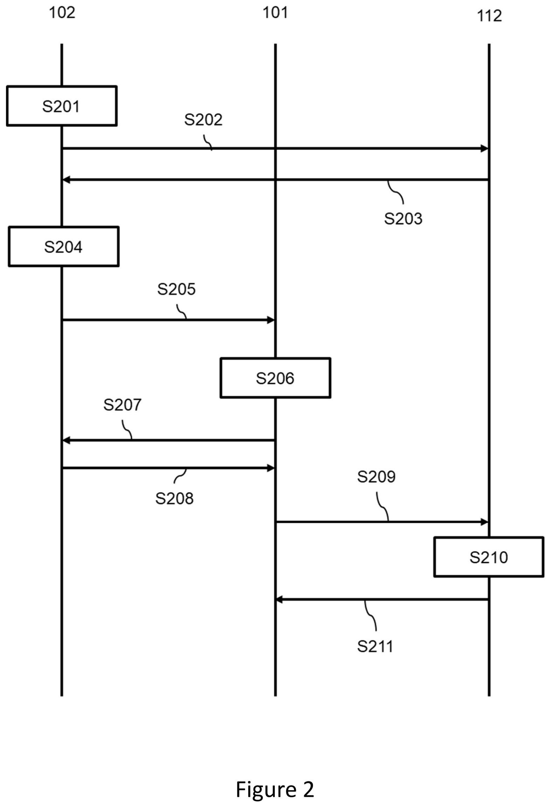

La figure 2 illustre les principales étapes d'un procédé de transfert de profil entre une eUICC source et une eUICC cible selon deux premiers modes de réalisation de l'invention.

Lors de l'étape S201, l'eUICC source surveille et enregistre toutes les modifications apportées au système de fichier lors de la vie du profil. Cette surveillance doit commencer dès l'installation du profil initial et se poursuivre tant que le profil est utilisé par, et/ou présent sur, le dispositif source. Les modifications susceptibles d'être apportées au système de fichier comprennent la suppression d'un fichier, l'ajout d'un nouveau fichier ou la modification d'un fichier existant. Toutes ces modifications sont enregistrées par l'eUICC source. De manière similaire, la suppression, l'ajout d'applications dans le profil sont également surveillées, ainsi que la modification des données d'application. Les données liées à un utilisateur d'une application ou à l'utilisation d'une application font aussi l'objet de la surveillance et de l'enregistrement, par l'eUICC source, dans le cadre des modifications apportées au profil, dans lequel l'application est installée ou fait partie. Dans un mode de réalisation, seules les données liées à une application d'un profil sont surveillées et enregistrées dans le cadre de la surveillance et de l'enregistrement de toutes les différences apportées au système de fichier.

Lors de l'étape S202, lorsque le transfert est demandé, typiquement par l'usager du dispositif, le dispositif source requiert l'identifiant de l'eUICC cible. Cette requête est typiquement faite par le LPA du dispositif source à destination du LPA du dispositif cible. Cette requête est typiquement transmise via un réseau WiFi auquel les deux dispositifs sont connectés, ou via une connexion Bluetooth entre les deux dispositifs ou encore via une connexion NFC entre les deux dispositifs.

Lors de l'étape S203, le dispositif cible transmet l'identifiant de l'eUICC cible au dispositif source. La transmission est typiquement faite par le LPA du dispositif cible à destination du LPA du dispositif souce.

Lors de l'étape S204, l'eUICC source génère un fichier des différences entre le profil initial installé dans l'eUICC source et le profil courant sur la base de toutes les différences enregistrées en continu lors de l'étape S201. Ce fichier de différence est appelé le Delta dans ce document. Avantageusement, l'eUICC source génère un jeton permettant la vérification de l'origine du fichier de différence et de son intégrité. Par exemple, le jeton peut correspondre à une somme de contrôle du Delta, typiquement une valeur de hachage calculée sur le contenu du Delta, signée par l'eUICC source.

Selon une première alternative, le contenu complet des fichiers modifiés ou ajoutés est ajouté dans le Delta. Selon une autre alternative, concernant les fichiers modifiés, les plages d'octets modifiées sont indiquées et seules ces plages d'octets sont transmises dans le Delta.

Il peut arriver que le profil comporte des applications de type « Javacard ». Ces applications se distinguent par l'existence d'instances de l'application persistantes en mémoire. La surveillance des modifications du système de fichier n'est alors pas suffisante pour refléter les évolutions du profil initial.

Le standard prévoit un mécanisme connu sous le nom de « Amendement H » spécifié dans le document « GlobalPlatform Technology Executable Load File Upgrade Card Specification v2.3 - Amendment H Version 1.1» sous la référence GPC_SPE_120. Ce mécanisme est prévu pour faciliter la mise à jour des applications « Javacard ». Il permet à une application « Javacard » d'exporter son état sous la forme d'un paquet de données. Ainsi il est possible à une application « Javacard » d'exporter son état avant d'être supprimée. Une nouvelle version de l'application « Javacard » est alors installée. Cette nouvelle version réimporte alors l'état depuis le paquet de données préalablement exporté. L'utilisation de l'amendement H nécessite que l'application « Javacard » soit compatible, c'est-à-dire qu'elle implémente les routines permettant l'export, puis l'import, de son état sous la forme d'un paquet de données conformément à l'amendement H.

Lorsque le profil devant être transféré comprend une ou plusieurs applications « Javacard » ces applications doivent être compatibles avec l'amendement H. Le mécanisme de l'amendement H est détourné de son objet initial pour générer pour chaque application « Javacard » du profil un paquet de données représentant son état qui est intégré au fichier des différences Delta. Il est alors possible, lors de l'installation du profil, pour les applications « Javacard » d'importer ces paquets de données et de retrouver l'état qu'elles avaient dans le profil courant dans l'eUICC source.

Lors de l'étape S205, le dispositif source notifie le SM-DP+ du transfert initié entre le dispositif source et le dispositif cible. Cette notification comporte le fichier Delta qui est transmis au SM-DP+. Lorsqu'un jeton est calculé, il est également transmis au SM-DP+ qui peut alors vérifier l'origine et l'intégrité du Delta. La notification comporte également l'identifiant de l'eUICC cible.

Lors de l'étape S206, le SM-DP+ retrouve à l'aide de l'identifiant de l'eUICC source, à l'origine de la notification, le profil initial qui fut transmis et installé dans l'eUICC source.

Dans un premier mode de réalisation, le SM-DP+ disposant du profil initial et du fichier de différences Delta entre ce profil initial et le profil courant applique ces différences au profil initial et prépare un profil correspondant au profil courant à destination de l'eUICC cible. Il est à noter que les paquets de données correspondant à l'état d'une application « Javacard » ne peuvent être appliqués par le SM-DP+. En effet, ces paquets de données ne peuvent être importés que par l'application « Javacard » elle-même suite à son installation au sein de l'eUICC cible. Ces paquets, lorsqu'ils sont présents dans le Delta, sont alors intégrés par le SM-DP+ dans le profil qu'il génère pour être utilisés lors de l'installation au sein de l'eUICC cible.

Alternativement, les paquets de données correspondant à l'état d'une application « Javacard » sont mis à disposition de l'eUICC cible sur un serveur. Une addresse de type URL (pour *Uniform Resource Locatoren* anglais) est alors fournie à l'eUICC cible pour permettre le chargement de ces paquets de données en utilisant le mécanisme connu sous le nom d'amendement B et décrit dans le document « GlobalPlatform Technology Remote Application Management over HTTP Card Specification v2.3 - Amendment B Version 1.2 » sous la référence GPC_SPE_011.

Dans un second mode de réalisation, le SM-DP+ prépare un profil correspondant au profil initial à destination de l'eUICC cible. Ce profil initial est bridé par le SM-DP+ pour éviter qu'il puisse être utilisé directement par l'eUICC cible sans appliquer le Delta préalablement. Dans ce mode de réalisation, le SM-DP+ prépare un profil correspondant au profil initial mais n'y applique pas le delta. L'eUICC cible sera en charge d'appliquer le delta sur le profil préparé reçu. Le delta sera envoyé, en compagnie du profil correspondant au profil initial, par le SM-DP+ à l'eUICC cible. Dans ce mode de réalisation, l'application du delta au profil initial constitue la dernière étape de l'installation du profil reçu. Le profil installé est donc le profil initial auquel a été appliqué le delta.

Lors de l'étape S207, le SM-DP+ notifie la bonne réception de la notification et du Delta à l'eUICC source.

A réception de la notification du SM-DP+, l'eUICC source supprime le profil courant et notifie le SM-DP+ de cette suppression lors de l'étape S208. En effet, un même profil ne peut être installé, ou du moins activé, dans deux eUICCs différentes. Le SM-DP+ est en charge du respect de cette contrainte. A ce titre, le SM-DP+ n'autorise le chargement et l'installation du profil transféré dans l'eUICC cible que une fois assuré de sa suppression, ou du moins de sa désactivation, dans l'eUICC source. Le SM-DP+ s'assure ainsi que le profil transféré ne soit lié qu'à une seule eUICC à la fois.

Lors de l'étape S209, le profil préparé par le SM-DP+ est transmis au LPA du dispositif cible pour installation dans l'eUICC cible. Dans le premier mode de réalisation, le profil transmis correspond au profil courant, il peut directement être chargé et installé dans l'eUICC cible. Dans le second mode de réalisation, le profil transmis est le profil initial. Le fichier Delta est alors transmis avec le profil, ainsi que le jeton s'il a été généré.

Lors de l'étape S210, le profil transmis est chargé et installé dans l'eUICC cible. Dans le second mode de réalisation, l'eUICC cible installe le profil initial puis applique le fichier Delta pour obtenir un profil installé correspondant au profil courant qui était installé dans l'eUICC source. Dans les deux modes de réalisation, à l'issue de l'étape S210 le profil courant qui devait être transféré est installé dans l'eUICC cible.

Lors de l'étape S211, l'eUICC cible notifie le succès de l'installation du profil dans l'eUICC cible. Le SM-DP+ peut alors mettre à jour les informations de lien entre le profil et l'eUICC sur laquelle il est installé. Le profil initial est alors lié à l'eUICC cible et non plus à l'eUICC source.

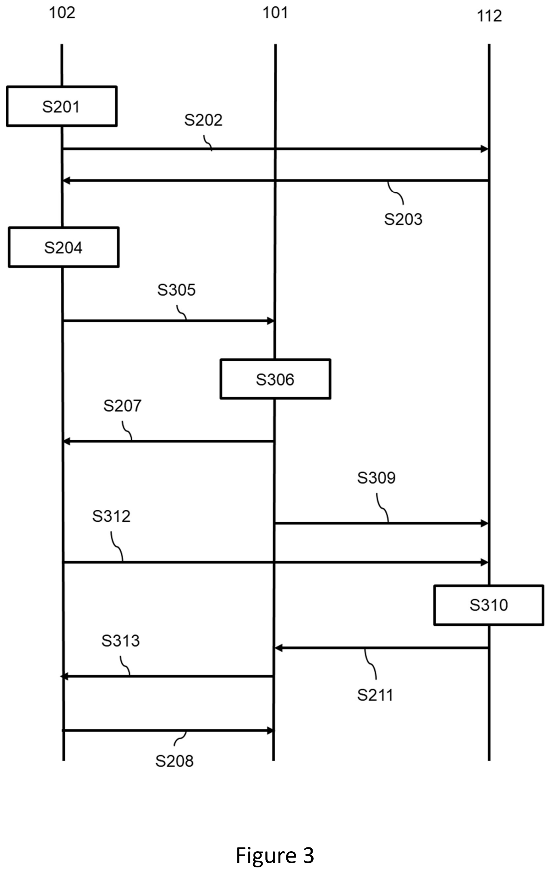

La figure 3 illustre les principales étapes d'un procédé de transfert de profil entre une eUICC source et une eUICC cible selon un troisième mode de réalisation de l'invention.

Ce troisième mode de réalisation de l'invention se distingue des deux premiers essentiellement par le mode de transmission du fichier de différence Delta entre l'eUICC source et l'eUICC cible. Dans ce troisième mode de réalisation, le Delta est transmis directement par le dispositif source au dispositif cible. Cette transmission utilise une connexion directe entre les LPA des dispositifs source et cible.

Les étapes identiques aux étapes de la figure 2 reprennent les références de la figure 2 et ne seront pas décrites de nouveau.

L'étape S305 correspond à l'étape S205 à la différence que le Delta n'est pas transmis par le dispositif source au SM-DP+.

Lors de l'étape S306, le profil préparé par le SM-DP+ correspond au profil initial ayant été chargé et installé dans l'eUICC source.

Lors de l'étape S309, le profil initial est transmis par le SM-DP+ au dispositif cible. Cette transmission ne comprend pas le Delta, ce dernier n'ayant pas été transmis au SM-DP+.

Le fichier Delta est transmis directement depuis le dispositif source au dispositif cible lors de l'étape S312. Cette transmission utilise la connexion directe entre le LPA du dispositif source et le LPA du dispositif cible. Lorsque le jeton est généré, il peut être transmis conjointement au Delta pour permettre au dispositif cible de vérifier l'origine et l'intégrité de ce Delta. Alternativement, le jeton peut être transmis au SM-DP+ lors de l'étape S305 et retransmis au dispositif cible conjointement au profil initial lors de l'étape S309.

L'étape S310 correspond à l'étape S210 selon le second mode de réalisation. C'est-à-dire que le LPA du dispositif cible dispose du profil initial (reçu dans le cadre de l'étape S309) qu'il transmet à l'eUICC cible pour installation. Le Delta est alors également transmis, par le LPA (reçu dans le cadre de l'étape S312), à l'eUICC cible qui l'applique au profil initial pour obtenir le profil courant.

Ce troisième mode de réalisation diffère également des premier et second modes de réalisation concernant le moment où le profil courant peut être supprimé de l'eUICC source. Dans le troisième mode de réalisation, l'eUICC est notifié lors de l'étape S313 du succès de l'installation du profil courant dans l'eUICC cible. Ce n'est qu'à ce moment que l'eUICC source supprime le profil courant et en notifie le SM-DP+ lors de l'étape S208. Il est à noter que le SM-DP+ n'autorise l'activation du profil courant dans l'eUICC cible qu'une fois avoir reçu la notification de sa suppression dans l'eUICC source. Dans un mode de réalisation, la notification envoyée par le SM-DP+ à l'étape S313 correspond, en outre, à une séquence de commandes de désactivation et suppression du profil courant sur l'eUICC source.

Ainsi, le procédé décrit permet au SM-DP+ de contrôler le transfert du profil et de maintenir à jour les informations de lien entre le profil et l'eUICC dans laquelle il est installé. Le procédé décrit permet de limiter le besoin de communication directe entre les dispositifs source et cible. Il permet également de limiter le besoin de préparation du profil du fait de la réutilisation du profil initial déjà généré.

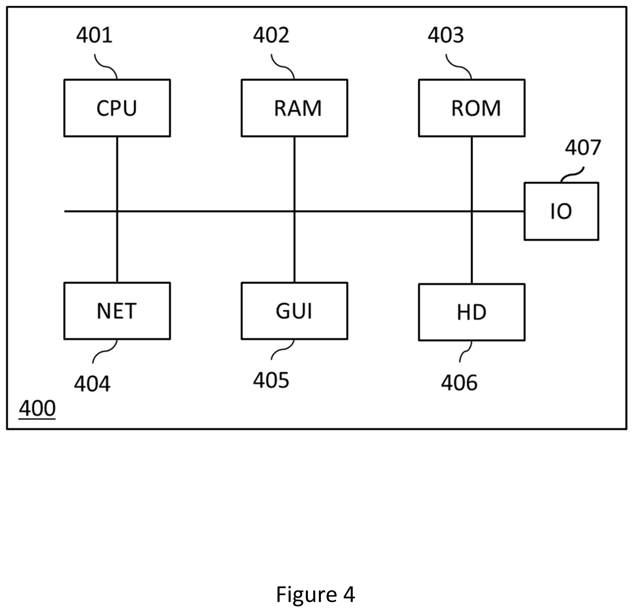

La figure 4 est un bloc-diagramme schématique d'un dispositif de traitement de l'information 400 pour la mise en œuvre d'un ou plusieurs modes de réalisation de l'invention. Le dispositif 400 de traitement de l'information peut être un périphérique tel qu'un micro-ordinateur, un poste de travail ou un terminal mobile de télécommunication. Le dispositif 400 comporte un bus de communication connecté à:
- une unité centrale de traitement 401, tel qu'un microprocesseur, notée CPU ;
- une mémoire à accès aléatoire 402, notée RAM, pour mémoriser le code exécutable du procédé de réalisation de l'invention ainsi que les registres adaptés à enregistrer des variables et des paramètres nécessaires pour la mise en œuvre du procédé selon des modes de réalisation de l'invention ; la capacité de mémoire du dispositif peut être complétée par une mémoire RAM optionnelle connectée à un port d'extension, par exemple ;
- une mémoire morte 403, notée ROM, pour stocker des programmes informatiques pour la mise en œuvre des modes de réalisation de l'invention ;
- une interface réseau 404, notée NET, est normalement connectée à un réseau de communication sur lequel des données numériques à traiter sont transmises ou reçues. L'interface réseau 404 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lus à partir de l'interface réseau pour la réception sous le contrôle de l'application logicielle exécutée dans le processeur 401 ;
- une interface utilisateur 405, notée GUI, pour recevoir des entrées d'un utilisateur ou pour afficher des informations à un utilisateur ;
- un dispositif de stockage 406 tel que décrit dans l'invention et noté HD ;
- un module d'entrée/sortie 407, noté IO, pour la réception / l'envoi de données depuis / vers des périphériques externes tels que disque dur, support de stockage amovible ou autres.

Le code exécutable peut être stocké dans une mémoire morte 403, sur le dispositif de stockage 406 ou sur un support amovible numérique tel que par exemple un disque. Selon une variante, le code exécutable des programmes peut être reçu au moyen d'un réseau de communication, via l'interface réseau 404, afin d'être stocké dans l'un des moyens de stockage du dispositif de communication 400, tel que le dispositif de stockage 406, avant d'être exécuté.

L'unité centrale de traitement 401 est adaptée pour commander et diriger l'exécution des instructions ou des portions de code logiciel du programme ou des programmes selon l'un des modes de réalisation de l'invention, instructions qui sont stockées dans l'un des moyens de stockage précités. Après la mise sous tension, le CPU 401 est capable d'exécuter des instructions de la mémoire RAM principale 402, relatives à une application logicielle. Un tel logiciel, lorsqu'il est exécuté par le processeur 401, provoque l'exécution des procédés décrits.

Dans ce mode de réalisation, l'appareil est un appareil programmable qui utilise un logiciel pour mettre en œuvre l'invention. Toutefois, à titre subsidiaire, la présente invention peut être mise en œuvre dans le matériel (par exemple, sous la forme d'un circuit intégré spécifique ou ASIC, pour Application-Specific Integrated Circuit en anglais).

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

## Revendications

1. Procédé de transfert d'un profil courant depuis un élément sécurisé source au sein d'un dispositif source vers un élément sécurisé cible au sein d'un dispositif cible, le procédé comprenant les étapes suivantes :
- surveillance et enregistrement par l'élément sécurisé source des modifications apportées à un profil initial installé dans l'élément sécurisé source pour obtenir le profil courant ;
- génération d'un fichier de différences entre le profil initial et le profil courant par l'élément sécurisé source sur la base des modifications enregistrées ;
- obtention du profil initial et génération d'un profil à installer sur l'élément sécurisé cible par un SM-DP+ ; et
- chargement et installation du profil généré dans l'élément sécurisé cible, le profil installé correspondant au profil initial auquel a été appliqué le fichier de différences généré.

2. Procédé selon la revendication 1, **caractérisé en ce que** le procédé comporte en outre les étapes suivantes :
- transmission du fichier de différences par l'élément sécurisé source au SM-DP+ ; et
- application du fichier de différence au profil initial par le SM-DP+ pour générer le profil à installer.

3. Procédé selon la revendication 1, **caractérisé en ce que** le procédé comporte en outre les étapes suivantes :
- transmission du fichier de différences par l'élément sécurisé source à l'élément sécurisé cible ; et
- le profil généré correspondant au profil initial, application du fichier de différence au profil initial après son installation par l'élément sécurisé cible.

4. Procédé selon la revendication 3, **caractérisé en ce que** la transmission du fichier de différences par l'élément sécurisé source à l'élément sécurisé cible est faite via le SM-DP+.

5. Procédé selon la revendication 3, **caractérisé en ce que** la transmission du fichier de différences par l'élément sécurisé source à l'élément sécurisé cible est faite par une connexion directe entre le dispositif source et le dispositif cible.

6. Procédé selon la revendication 1, **caractérisé en ce que** le profil courant comprenant des applications « Javacard », le fichier de différence intègre pour chaque application « Javacard » un paquet de données représentant l'état de l'application « Javacard ».

7. Procédé de transfert d'un profil courant depuis un élément sécurisé source au sein d'un dispositif source vers un élément sécurisé cible au sein d'un dispositif cible, le procédé comprenant les étapes suivantes par l'élément sécurisé source :
- surveillance et enregistrement par l'élément sécurisé source des modifications apportées à un profil initial installé dans l'élément sécurisé source pour obtenir le profil courant ;
- génération d'un fichier de différences entre le profil initial et le profil courant par l'élément sécurisé source sur la base des modifications enregistrées ; et
- transmission du fichier de différences au dispositif cible ou à un serveur SM-DP+.

8. Procédé de transfert d'un profil courant depuis un élément sécurisé source au sein d'un dispositif source vers un élément sécurisé cible au sein d'un dispositif cible, le procédé comprenant les étapes suivantes par l'élément sécurisé cible :
- chargement et installation d'un profil initial ;
- réception d'un fichier de différences entre le profil initial et le profil courant ; et
- application du fichier de différences au profil initial installé pour obtenir le profil courant.

9. Elément sécurisé source comprenant un processeur, le processeur étant configuré pour effectuer les étapes suivantes pour un transfert d'un profil courant depuis l'élément sécurisé source au sein d'un dispositif source vers un élément sécurisé cible au sein d'un dispositif cible :
- surveillance et enregistrement des modifications apportées à un profil initial installé dans l'élément sécurisé source pour obtenir le profil courant ;
- génération d'un fichier de différences entre le profil initial et le profil courant par l'élément sécurisé source sur la base des modifications enregistrées ; et
- transmission du fichier de différences au dispositif cible ou à un serveur SM-DP+.

10. Elément sécurisé cible comprenant un processeur, le processeur étant configuré pour effectuer les étapes suivantes pour un transfert d'un profil courant depuis un élément sécurisé source au sein d'un dispositif source vers l'élément sécurisé cible au sein d'un dispositif cible :
- chargement et installation d'un profil initial ;
- réception d'un fichier de différences entre le profil initial et le profil courant ; et
- application du fichier de différences au profil initial installé pour obtenir le profil courant.
